# EUROPÄISCHE PATENTSCHRIFT

(11) **EP 2 515 381 B1**
(45) Veröffentlichungstag und Bekanntmachung des Hinweises auf die Patenterteilung: **25.11.2015**
(21) Anmeldenummer: 12164559.2
(22) Anmeldetag: 18.04.2012
(51) Int. Cl.: H01R 11/28, H01M 2/20

(54) **Batterieverbinder**
Battery connector
Attache de batterie

(30) Priorität: 19.04.2011 DE 202011000930 U
(43) Veröffentlichungstag der Anmeldung: 24.10.2012
(73) Patentinhaber: Hagemann-Systems GmbH, 38104 Braunschweig (DE)
(72) Erfinder: Trimborn, Jens, 42349 Wuppertal (DE)
(74) Vertreter: Müller, Enno

(56) Entgegenhaltungen:
- EP-A1- 1 901 368
- EP-A2- 0 420 784
- WO-A1-2010/142679
- CH-A- 554 059
- DE-A1- 4 301 623
- DE-A1-102006 015 566
- DE-A1-102009 033 370
- DE-U1-202007 014 405
- GB-A- 2 083 278
- JP-A- 2003 249 207
- US-B1- 6 773 301

## Beschreibung

Die Erfindung betrifft einen Batterieverbinder nach den Merkmalen des Oberbegriffes des Anspruches 1.

Derartige Batterieverbinder sind bereits in vielfacher Hinsicht bekannt, Es wird beispielsweise auf die DE 85 20 278 U1, die DE 196 00 417 A1 und die DE 20 2007 014 405 U1 verwiesen.

Aus der EP 0 420 784 A2 ist ein Batterieverbinder bekannt, bei welchem eine große Anzahl von Folienelementen durch eine Umhüllung zusammengefasst ist, welche Umhüllung zugleich eine Relativbewegung der Folienelemente im mittleren Bereich des Batterieverbinders verhindert. In den Anschlussbereichen liegen die Folienelemente frei.

Bei dem aus der DE 20 2007 014 405 U1 bekannten Batterieverbinder bestehen die Leiterelemente aus Kupfer-Flachteilen, die jeweils gesondert mit einer Schrumpfumhüllung versehen sind und distanziert zueinander verlaufen, im Anschlussbereich aufeinanderliegend zusammenzuführen. Eine solche Ausgestaltung ist aber nicht unter allen Einsatzbedingungen immer als günstig anzusehen. Es ist nicht immer zu erreichen, dass in der gewünschten Weise die Stromleitung gleichberechtigt über beide Flachteile erfolgt. Es kann entsprechend zu einer Überhitzung eines der Flachteile kommen. Weiter ist die gewünschte Flexibilität in der Anordnung nicht in jedem Fall gegeben. Die beabstandet zueinander verlaufenden Flachteile verleihen dem Batterieverbinder als solchem insgesamt ein sehr hohes Widerstandsmoment gegen Biegung.

Darüber hinaus ist zum Stand der Technik noch auf die WO 2010/142679 A1, die GB 2 083 278 A, die US 6,773,301, die CH 554 059 A und die DE 10 2006 015 566 A1 zu verweisen.

Ausgehend von einem Stand der Technik gemäß der EP 0 420 784 beschäftigt sich die Erfindung mit der Aufgabe, einen Batterieverbinder für Akkumulatorenbatterien anzugeben, bei dem eine hohe elektrische Zuverlässigkeit mit einer günstigen Biegbarkeit kombiniert ist.

Die Aufgabe ist beim Gegenstand des Anspruches 1 gelöst, wobei darauf abgestellt ist, dass die Leiterelemente aus einer Mehrzahl von innerhalb einer die Leiterelemente insgesamt umfassenden Isolierung (ersten Isolierung) an den zugewandten Breitseiten zwischen den Anschlussbereichen unmittelbar aufeinander liegenden Flachteilen bestehen, wobei sie ein Verhältnis von Breite zu Dicke von 5:1 bis 100:1 aufweisen, wobei weiter, zufolge der Verbindung der Flachteile im aufeinander liegenden Bereich nur durch die erste Isolierung, sie sich relativ zueinander bewegen können, wobei weiter die mehreren Flachteile in den Anschlussbereichen gemeinsam umspritzt sind.

Die Batterieverbinder sind entsprechend über die gesamte Länge aus unmittelbar übereinanderliegenden Flachteilen, die gemeinsam mit der ersten Isolierung umhüllt sind, aufgebaut. Die Flachteile bilden auch integral einheitlich die Anschlussbereiche. Die aufeinanderliegenden Flachteile können zur Kombination unterschiedlicher Werkstoffe genutzt sein. Beispielsweise kann ein Flachteil aus einem Aluminiumwerkstoff bestehen und ein weiteres Flachteil aus einem Kupferwerkstoff. Die Flachteile können auch unabhängig von dem jeweiligen Werkstoff unterschiedlich dick ausgebildet sein. Auch ermöglicht der Aufbau des Batterieverbinders durch die aufeinanderliegenden Flachteile auch eine Biegbarkeit, wobei insbesondere eine Biegbarkeit um eine Achse quer zur Längserstreckung der Flachteile gegeben ist. Da die Flachteile nur durch die gemeinsame erste Isolierung verbunden sind, können Relativbewegungen bei einem etwaigen Biegevorgang auch aufgenommen werden. Insbesondere bedarf es keiner besonderen Ausbildung von Anschlussbereichen. Die Anschlussbereiche sind vielmehr integrale Bestandteile der Endbereiche der zusammengefassten Flachteile.

Im Falle, dass eines der Flachteile zufolge einer Stromdurchleitung thermisch höher belastet ist als ein anderes Flachteil, kann eine sich ergebende unterschiedliche Wärmeentwicklung über ein oder zwei unmittelbar darauf liegend angeordnete weitere Flachteile günstig ausgeglichen und auf einen größeren Querschnitt verteilt werden.

Es ist bevorzugt, wie auch schon als grundsätzliche Möglichkeit angesprochen, dass die Leiterelemente aus unterschiedlichen Werkstoffen bestehen. Hierbei ist es möglich, dass ein Leiterteil aus einem einheitlichen homogenen Werkstoff besteht. Es ist aber auch bei einem oder mehreren der Leiterelemente bereits eine inhomogene Werkstoffanordnung, wie weiter unten noch erläutert, möglich.

Insbesondere ist bevorzugt, dass eines oder mehrere der Leiterelemente aus Kupfer bestehen. Das Kupferleiterelement kann ein- oder beidseitig von einem weiteren Leiterelement, insbesondere einem weiteren Leiterelement geringerer elektrischer Leitfähigkeit, wie beispielsweise einem Aluminiumleiterelement, abgedeckt sein. Entsprechend ist es auch bevorzugt, dass eines oder mehrere Leiterelemente aus Aluminium bestehen. Ein Kupferelement kann - im Querschnitt - randseitig aber auch beispielsweise mittig angeordnet sein. Im Hinblick auf unterschiedliche Dicken kann auch ein vergleichsweise dünnes Kupferelement mit einem oder mehreren vergleichsweise dicken Aluminiumelementen kombiniert sein.

Es ist auch möglich, dass im Flach-Anlagebereich von zwei Flachteilen eine Isolationslage (dritte Isolierung) zwischengelegt ist. Eine solche dritte Isolierung ist dann jedoch in den Anschlussbereichen nicht vorhanden. Bevorzugt ist, dass zwischen den Flachteilen über deren jeweilige gesamte Länge ein unmittelbarer metallischer Kontakt gegeben ist.

Im Hinblick auf eine inhomogene Werkstoffausbildung eines einzelnen Leiterelements ist es bevorzugt, dass ein solches Leiterelement aus einem ersten Kernwerkstoff und einem zweiten Ummantelungswerkstoff besteht. Insbesondere kann der Kernwerkstoff Aluminium sein und der Ummantelungswerkstoff Kupfer. Der Ummantelungswerkstoff kann durch eine folienartige Umhüllung des Kernwerkstoffes gegeben sein oder auch im Tauchverfahren oder elektrolytisch aufgebracht sein.

Weiter ist auch bevorzugt, dass mehrere in einer ersten Isolierung zusammengefasste Leiterelemente innerhalb einer Gesamtisolierung (zweite Isolierung) aufgenommen sind. Es handelt sich dann gleichsam um zwei oder mehrere Bündel von Leiterelementen, bei denen jedes Bündel von Leiterelementen eine eigene, zusammenfassende erste Isolierung aufweist, diese Bündel dann aber bevorzugt nochmals in einer Gesamtisolierung, zweite Isolierung, aufgenommen sind. Diese zusammenfassende zweite Isolierung ist weiter bevorzugt im Bereich der Anschlussbereiche, insbesondere auch mittig zwischen zwei ansonsten aufeinanderliegenden Flachteilen, nicht gegeben.

Ein derartiger Batterieverbinder kann auch durchgehend mittels nur einer, im Zuge einer Extrusion etwa aufgebrachten ersten Isolierung gebildet sein. Die weiter bevorzugt dann aus gleichsam Endlosteilen abgelängten einzelnen Flachteile oder einzelnen Gruppen von Flachteilen mit dieser ersten bzw. zweiten Isolierung können im Anschlussbereich auch diese erste bzw. zweite Isolierung behalten, wobei diese erste bzw. zweite Isolierung lediglich, beispielsweise kreisförmig, im Bereich der Auflage auf den Batteriepol oder der Auflage der Halteschraube in den Anschlussbereichen entfernt ist. Die Stirnseiten, die sich im Hinblick auf beispielsweise die beschriebene Herstellung dann ohne erste bzw. zweite Isolierung ergeben, können durch eine gesonderte, etwa händisch aufgebrachte vierte Isolierung abgedeckt sein, sie können auch durch eine Schutzkappe beispielsweise abgedeckt sein.

Eine weitere bevorzugte Ausführungsform betrifft die Anordnung eines oder beider Anschlussbereiche der Batterieverbinder relativ zu dem sich zwischen den Anschlussbereichen erstreckenden Bereich der Leiterelemente. Die Anschlussbereiche haben in diesem Fall eine unterschiedliche Flächenausrichtung zu der Flächenausrichtung der Flachteile zwischen den Anschlussbereichen. Diesbezüglich ist eine Verdrehung bevorzugt. Diese Verdrehung ist durch Verbiegen der genannten Bereiche der - zusammengefassten - Leiterelemente zueinander erreicht.

Diese Verdrehung ist bevorzugt in einem Winkelbereich von 5° bis 120° vorgenommen.

Weiter ist auch bevorzugt, dass sich ein zwischen dem Anschlussbereichen erstreckender Bereich des oder der Flachteile bezogen auf eine Draufsicht und/oder eine Seitenansicht ein- oder mehrfach U-förmig verläuft. Hierbei, und auch nachstehend, ist mit Draufsicht die Ansicht von oben auf den Batterieverbinder angesprochen, bezogen auf einen Montagezustand, in welcher Ansicht eine Durchgangsöffnung im Anschlussbereich, siehe auch beigefügte Zeichnung, nicht oval, sondern eben kreisförmig erscheint. In der Seitenansicht erscheinen die Anschlussbereiche im (kleinstmöglichen) Profil.

Der U-förmige Verlauf muss nicht streng U-förmig gegeben sein. Ein streng U-förmiger Verlauf, der auch für einen Bereich des Batterieverbinders entsprechend möglich ist, ist jedoch zunächst durch parallel verlaufende und gleichlange U-Schenkel gegeben.

Die U-Schenkel können aber auch unterschiedlich lang gestaltet sein und/oder konvergierend oder divergierend zueinander in einer der genannten Ansichten verlaufen. Insbesondere können sie in einem eingeschlossenen Winkel von 1° bis 90° beispielsweise divergierend verlaufen.

Es können auch über die Erstreckung des Batterieverbinders zwischen den Anschlussbereichen mehrfach U-förmige Gestaltungen, in einer der genannten Ausgestaltungen, ausgebildet sein.

Eine Länge jedenfalls eines der U-Schenkel entspricht bevorzugt der Dicke des Batterieverbinders in diesem Bereich, wie sie in der genannten Ansicht erscheint, oder mehr. Sie kann auch bspw. zwischen 0,5 und dem 5-fachen der genannten Dicke entsprechen.

Alternativ oder ergänzend kann auch der Batterieverbinder in der genannten Draufsicht insgesamt U-förmig ausgebildet sein. Dies bedeutet, dass im Wesentlichen die Anschlussbereiche die U-Schenkel bilden, während der dazwischen sich erstreckende Bereich den U-Steg bildet. Auch hierbei können die U-Schenkel bezogen auf ihre Längserstreckung einen Winkel zwischen sich von beispielsweise 10° bis beispielsweise hin zu 100° miteinander einschließen.

Gegenstand der Erfindung ist weiterhin eine Akkumulatorenbatterie mit zwischen einzelnen Polen der Elemente der Akkumulatorenbatterie diese elektrisch verbindenden Batterieverbindern mit den Merkmalen eines der Ansprüche 1 bis 11. Insofern ist es bevorzugt, dass der aus einem oder mehreren Flachteilen bestehende Batterieverbinder zwischen den Anschlussbereichen derart verläuft, dass eine Erstreckungsebene eines Flachteils unter Einschluss eines spitzen oder rechten Winkels zu einer Horizontalen verläuft. Diese Bereiche der Flachteile können also gleichsam hochkant zu einer Horizontalen verlaufen. Hiermit ist insbesondere eine günstige wärmetechnische Anordnung erreicht. Es kann sich günstig eine natürliche Konvektionsströmung einstellen, etwa vergleichbar einer Konvektionsströmung an einem Flachheizkörper.

Der Winkel kann beispielsweise zwischen 30° und 90° betragen.

In weiterer Einzelheit kann die erste Isolierung, welche die beschriebene Mehrheit von Flachteilen umfasst, aufextrudiert sein. Dagegen ist es bevorzugt, dass in den Anschlussbereichen eine weitere Isolierung aufgebracht ist, die im Kunststoffspritzverfahren aufgebracht ist.

Der zwischen den einzelnen Polen der Elemente der Akkumulatorenbatterie angeordnete Batterieverbinder kann im Übrigen ein oder mehrere weitere Merkmale des Batterieverbinders, wie sie weiter vorstehend auch erläutert sind, aufweisen.

Die vor- und nachstehend angegebenen Bereiche bzw. Wertebereiche schließen hinsichtlich der Offenbarung auch sämtliche Zwischenwerte ein, insbesondere in ein-Zehntel-Schritten der jeweiligen Dimension, gegebenenfalls also auch dimensionslos, also beispielsweise 1/10 Winkelgrad oder ein Dickenverhältnis von 5,1:1 etc., einerseits zur Eingrenzung der genannten Bereichsgrenzen von unten und/ oder oben, alternativ und ergänzend aber auch im Hinblick auf die Offenbarung eines oder mehrerer singulärer Werte aus dem jeweilig angegebenen Bereich.

Nachstehend ist die Erfindung des Weiteren anhand der beigefügten Zeichnung erläutert, die aber lediglich Ausführungsbeispiele darstellt. Ein Teil, das nur bezogen auf eines der Ausführungsbeispiele erläutert ist und bei einem weiteren Ausführungsbeispiel auf Grund der dort herausgestellten Besonderheiten nicht durch ein anderes Teil ersetzt ist, ist damit auch für dieses weitere Ausführungsbeispiel als jedenfalls mögliches vorhandenes Teil beschrieben. Auf der Zeichnung zeigt:
- Fig. 1: einen Querschnitt durch einen Batterieverbinder erster Ausführungsform;
- Fig. 2: eine perspektivische Ansicht eines Batterieverbinders mit abgebogenen Anschlussbereichen;
- Fig. 3: eine schematische Anordnung zweier Batteriezellen einer Akkumulatorenbatterie mit einem zwei Pole verbindenden Batterieverbinder gemäß Figur 2;
- Fig. 4: eine weitere Darstellung gemäß Figur 1 mit einer trapezartigen Gestaltung;
- Fig. 5: eine Darstellung gemäß Figur 3, mit U-förmigem Verlauf zwischen den Anschlussbereichen;
- Fig. 6: eine Darstellung eines Batterieverbinders entsprechend Figur 4, mit doppelt U-förmigem Verlauf größerer Erstreckung;
- Fig. 7: eine Darstellung eines Batterieverbinders gemäß Figur 4 bzw. Figur 6, mit doppelt U-förmigem Verlauf geringerer Erstreckung; und
- Fig. 8: eine weitere Ausführungsform eines Batterieverbinders gemäß Figur 3, in der Draufsicht, mit angedeuteter möglicher Ausgestaltung auch gemäß Figur 5.

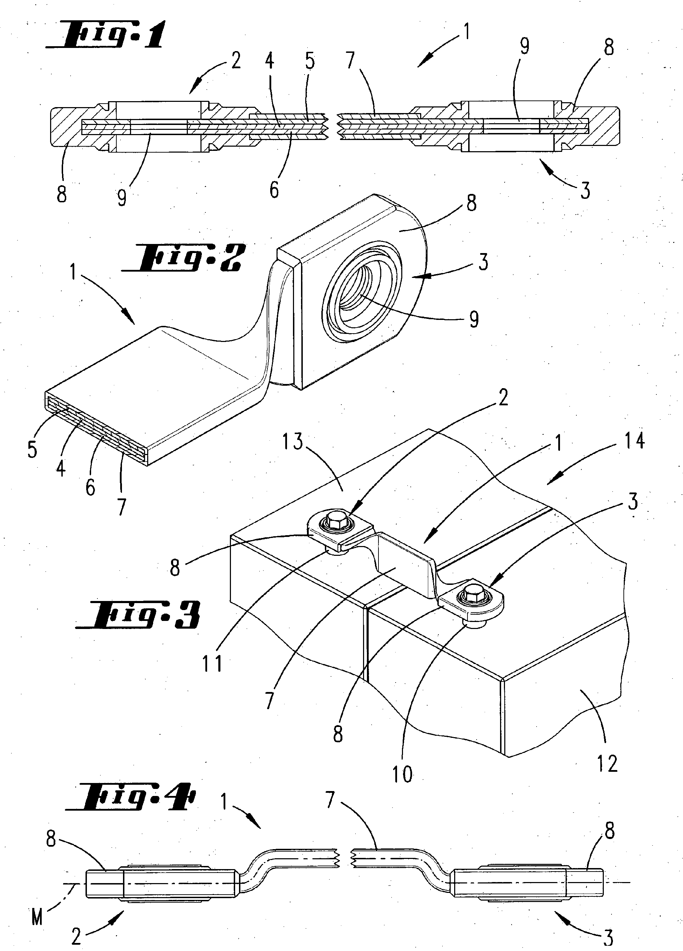

Dargestellt und beschrieben ist zunächst mit Bezug zu Figur 1 ein Batterieverbinder 1, der zwei Anschlussbereiche 2, 3, seinen gegenüberliegenden Enden zugeordnet, aufweist. Der Batterieverbinder 1 ist hinsichtlich der leitenden Elemente aus zwei oder mehr, bspw. bis hin zu 10 Flachteilen 4, 5, 6 zusammengesetzt. Diese Flachteile 4, 5 und 6 liegen über die gesamte Länge des Batterieverbinders 1 flach aufeinander auf. Sie sind durch eine erste Isolierung, Isolierumhüllung 7, zusammengehalten. Diese Isolierumhüllung 7 umgibt die Flachteile 4, 5 und 6 nur zusammengefasst an ihrem zusammengefassten Außenumfang. In den Anschlussbereichen 2 und 3 ist eine weitere Isolierumhüllung 8 ausgebildet, die im Kunststoffspritzverfahren aufgebracht ist. Auch diese Isolierumhüllung 8 umgibt die durch die Mehrzahl der Flachteile 4, 5 und 6 in den Anschlussbereichen 2 und 3 gebildete äußere Kontur des Batterieverbinders. In üblicher und bekannter Weise ist die zum Anschluss an die Pole erforderliche Durchgangsöffnung 9 und ein diesbezüglicher Randbereich nicht mit der Isolierumhüllung 8 versehen.

Die Flachteile 4, 5 und 6 bestehen bei dem Ausführungsbeispiel der Figur 1 aus unterschiedlichen Werkstoffen. Während das mittlere Flachteil 4 aus einem Aluminiumwerkstoff besteht, bestehen die äußeren Flachteile 5 und 6 aus einem kupferummantelten Aluminiumkern. Die Kupferummantelung kann beispielsweise elektrolytisch auf einen solchen Aluminiumkern aufgebracht sein.

Alternativ zu vorstehendem Aufbau kann auch ein mittleres Flachteil aus einem kupferummanteltem Aluminiumkern bestehen und die beiden oder weitere äußere Flachteile aus einem einheitlichen Aluminiumwerkstoff.

Die Flachteile 4, 5, 6 sind an ihren einander zugewandten Flachseiten, an denen sie aneinander anliegen, nicht verbunden. Sie können sich also in einem gewissen Ausmaß relativ zueinander bewegen. Es ist insbesondere von Bedeutung im Fall einer Verbiegung des Batterieverbinders. Oftmals sind die Abstände zwischen einzelnen Polen 10,11, von Batterieelementen 12,13, siehe auch Figur 3, nicht einem vorgegebenen Maß entsprechend gegeben. Hier ist es güns tig, wenn man einen Batterieverbinder 1 gemäß Figur 1 an seinem Einsatzort individuell so verbiegen kann, dass sich der erforderliche Abstand zwischen den Anschlussbereichen 2, 3 ergibt.

Die genannten Flachteile, in ihrer aufeinanderliegenden Form, können mit der ersten Isolierung, der Isolierumhüllung 7, im Durchlauf-Extrusionsverfahren umhüllt sein. Zur Ausbildung der Anschlussbereiche werden solchermaßen in einer Isolierumhüllung 7 zusammengefasste Flachteile von einem Endlosteil abgelängt und dann im Bereich der vorgesehenen Anschlussbereiche 2, 3 von der ersten Isolierung 7 befreit. Sodann werden sie in eine Kunststoff-Spritzmaschine eingelegt und mit der Isolierumhüllung 8 in den Anschlussbereichen 2, 3 umspritzt.

Bei der Ausführungsform der Figur 2 ist dargestellt, dass die Mehrheit der aufeinanderliegenden Flachteile 4, 5 und 6 in den Anschlussbereichen verdreht ist gegenüber dem sich zwischen den Anschlussbereichen erstreckenden Bereich des Batterieverbinders. Es ergibt sich gleichsam eine Verdrehung der zusammengefassten Flachteile in den Anschlussbereichen insgesamt relativ zu dem dazwischenliegenden Bereich. Der eigentliche Verdrehungsbereich ist aber bevorzugt in den Übergangsbereich zwischen der Isolierung 7 und der Isolierung 8 oder nur in dem unmittelbar an die Isolierung 8 anschließenden Bereich der Isolierung 7 ausgebildet.

Mit Bezug zu Figur 3 ist teilweise eine Akkumulatorenbatterie 14 dargestellt mit den bereits erwähnten zwei Batterieelementen 12 und 13. Diese Batterieelemente 12 und 13 sind durch einen Batterieverbinder 1 miteinander verbunden.

In dem mittleren Bereich, zwischen den Anschlussbereichen 2 und 3 ist der Batterieverbinder 1, der im Hinblick auf diese Ausführungsform auch nur aus einem einzigen Flachteil bestehen kann, gegenüber den Anschlussbereichen so verbogen, dass er praktisch senkrecht steht. Hierdurch lässt sich ein günstiger thermischer Effekt zur Kühlung des Batterieverbinders erreichen.

Die Ausführungsform der Figur 4 entspricht der Ausführungsform der Figur 1, jedoch ist in einer Seitenansicht wie ersichtlich eine derartige Gestaltung des Batterieverbinders 1 vorgenommen, dass sich ein hinsichtlich einer Mittellinie M insgesamt (halb-) trapezartiger Verlauf ergibt. Die mittlere Absenkung kann vorteilhaft im Hinblick auf eine raumsparende Anordnung zusammengefasst mit den Batterieelementen sein.

Alternativ oder ergänzend kann der Batterieverbinder in einer Seitenansicht auch mit einer U-förmigen Gestaltung vorgeformt sein. Die U-Gestaltung kann hinsichtlich der U-Schenkel unmittelbar am Übergang der Anschlussbereiche in den anschließenden Zwischenabschnitt des Batterieverbinders gegeben sein. Sie kann aber auch auf einen mittleren Bereich des Batterieverbinders nur beschränkt vorgesehen sein. Weiter alternativ oder ergänzend kann auch eine S-Ausbildung in dieser Hinsicht vorgesehen sein. Hierbei biegt der Batterieverbinder in seiner Längserstreckung zunächst nach unten ab, im Sinne einer ersten U-Gestaltung, wechselt dann über eine mittlere Erstreckungsebene nach oben zu einer zweiten, gleichsam entgegengesetzt gerichteten U-Gestaltung um dann wieder in den Bereich der mittleren Ebenenerstreckung einzulaufen. Auch diese Gestaltung kann unmittelbar anschließen an die Anschlussbereiche oder zusammengefasst auf einen mittleren Bereich bezogen auf die Längserstreckung des Batterieverbinders gegeben sein.

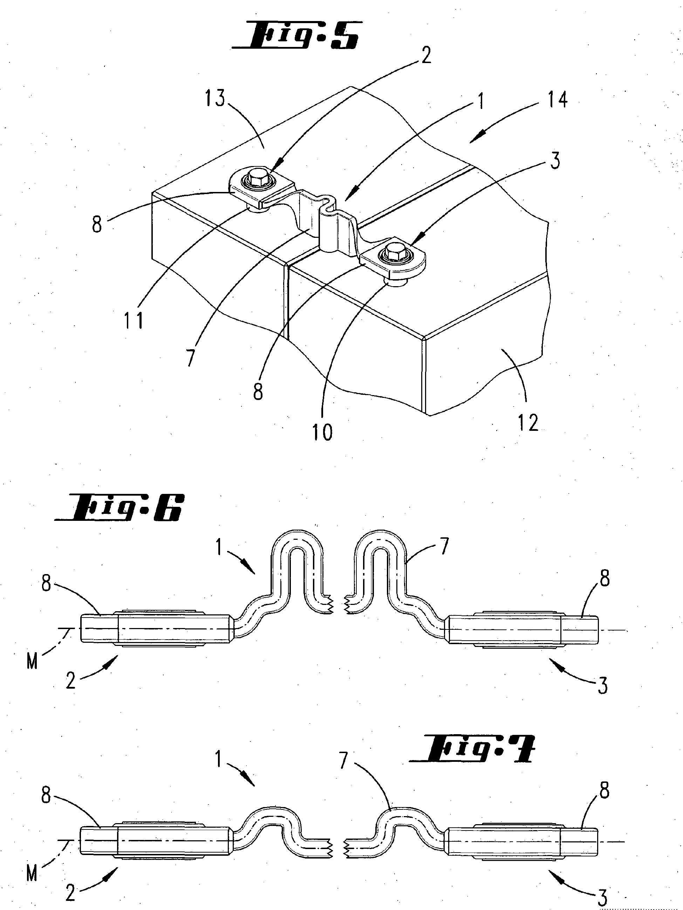

Unter Bezug auf die Ausführungsform der Figur 5 ist ersichtlich, dass der sich zwischen den Anschlussbereichen 2 und 3 erstreckende Bereich des Batterieverbinders nicht nur umgebogen sein kann, sondern auch ein oder mehrere Wellenformen, insbesondere, bezogen auf eine Draufsicht, in U-förmigem Verlauf, aufweisen kann. Die zusammengefassten Flachteile verlaufen hierbei auch in gleicher Weise zusammengefasst in den Wellenformen. Auch die Wellenform ist durch die Zusammenfassung selbst gebildet.

In einer Alternative kann allerdings auch vorgesehen sein, dass in der Wellenform gleichsam eine Auffächerung der Flachteile gegeben ist, wobei diese ggf. auch gegeneinander gerichtet jeweils eine Wellenform einnehmen können.

Das Gleiche ist in einer Ausgestaltung betreffend eine Seitenansicht möglich, siehe Figuren 6 und 7. Im Hinblick auf die im Anwendungsfall sich im Unterbereich befindenden Batterieelemente ist auch bevorzugt, dass die durch eine Wellenform sich ergebende Auslenkung, siehe insbesondere Figur 6, sich im Wesentlichen nach oben (nur) ergibt.

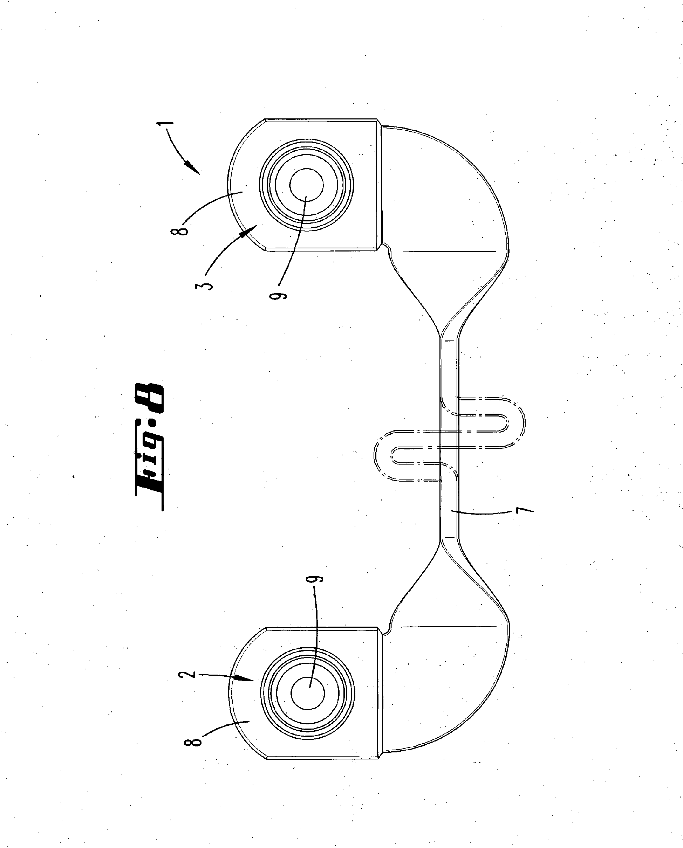

Mit Bezug zu Figur 8 ist ersichtlich, dass auch der Batterieverbinder insgesamt in der wiedergegebenen Draufsicht U-förmig gestaltet sein kann. Hierbei bilden im Wesentlichen die Anschlussbereiche 2, 3 die U-Schenkel, während der zwischen den Anschlussbereichen sich erstreckende Bereich des Batterieverbinders den U-Steg bildet. Ergänzend kann hier auch noch die Umbiegung gemäß Figur 2 bzw. Figur 3 ausgebildet sein und/ oder der wellenförmige oder U-förmige Verlauf gemäß bspw. Figur 5, wie ersichtlich, gegeben sein.

### Bezugszeichenliste

- 1: Batterieverbinder
- 2: Anschlussbereiche
- 3: Anschlussbereiche
- 4: Flachteil
- 5: Flachteil
- 6: Flachteil
- 7: Isolierung/Isolierumhüllung
- 8: Isolierung
- 9: Durchgangsöffnung
- 10: Pol
- 11: Pol
- 12: Batterieelement
- 13: Batterieelement
- 14: Akkumulatorenbatterie

## Patentansprüche

1. Batterieverbinder (1) für Akkumulatorenbatterien, mit durch Leiterelemente, die einen Leiterquerschnitt aufweisen, verbundenen Anschlussbereichen (2,3), wobei der Batterieverbinder (1) im Bereich der Leiterelemente biegbar ist, **dadurch gekennzeichnet, dass** die Leiterelemente aus einer Mehrzahl von innerhalb einer die Leiterelemente insgesamt umfassenden ersten Isolierung (7) an den zugewandten Breitseiten zwischen den Anschlussbereichen (2, 3) unmittelbar aufeinander liegenden Flachteilen (4, 5, 6) bestehen, wobei sie ein Verhältnis von Breite zu Dicke von 5:1 bis 100:1 aufweisen, wobei weiter, zufolge der Verbindung der Flachteile (4, 5, 6) im aufeinanderliegenden Bereich nur durch die erste Isolierung (7), sie sich relativ zueinander bewegen können, wobei weiter die mehreren Flachteile (4, 5, 6) in den Anschlussbereichen (2, 3) gemeinsam umspritzt sind.

2. Batterieverbinder nach Anspruch 1, **dadurch gekennzeichnet, dass** die Flachteile (4, 5, 6) aus unterschiedlichen Werkstoffen bestehen.

3. Batterieverbinder nach einem der vorhergehenden Ansprüche, **dadurch gekennzeichnet, dass** ein oder mehrere Flachteile (4, 5, 6) aus Kupfer bestehen.

4. Batterieverbinder nach einem der vorhergehenden Ansprüche, **dadurch gekennzeichnet, dass** ein oder mehrere Flachteile (4, 5, 6) aus Aluminium bestehen.

5. Batterieverbinder nach einem der vorhergehenden Ansprüche, **dadurch gekennzeichnet, dass** ein oder mehrere Flachteile (4, 5, 6) aus kupferummanteltem Aluminium bestehen.

6. Batterieverbinder nach einem der vorhergehenden Ansprüche, **dadurch gekennzeichnet, dass** mehrere in einer zweiten Isolierung zusammengefasste Leiterelemente aus einer Mehrheit von in der ersten Isolierung zusammengefässten Flachteilen (4, 5, 6) bestehen.

7. Batterieverbinder nach einem der vorhergehenden Ansprüche, **dadurch gekennzeichnet, dass** ein Anschlussbereich (2, 3) gegenüber dem sich zwischen den Anschlussbereichen (2, 3) erstreckenden Bereich der Flachteile (4, 5, 6) verdreht ist.

8. Batterieverbinder nach Anspruch 7, **dadurch gekennzeichnet, dass** die Verdrehung in einem Winkelbereich von 5° bis 100° vorgenommen ist.

9. Batterieverbinder nach einem der vorhergehenden Ansprüche, **dadurch gekennzeichnet, dass** ein sich zwischen den Anschlussbereichen (2, 3) erstreckender Bereich der Flachteile (4, 5, 6) bezogen auf eine Draufsicht ein- oder mehrfach U-förmig verläuft.

10. Batterieverbinder nach Anspruch 9, **dadurch gekennzeichnet, dass** der Batterieverbinder bezogen auf eine Draufsicht insgesamt U-verlaufend ausgebildet ist.

11. Akkumulatorenbatterie (14) mit einem zwischen zwei Polen (10,11) von Elementen der Akkumulatorenbatterie diese elektrisch verbindend angeordneten Batterieverbinder (1), mit den Merkmalen eines der Ansprüche 1 bis 11, **dadurch gekennzeichnet, dass** der Batterieverbinder (1) aus einem oder mehreren Flachteilen (4, 5, 6) besteht und zwischen Anschlussbereichen (2, 3) derart verläuft, dass eine Erstreckungsebene eines Flachteils (4, 5, 6) unter Einschluss eines spitzen oder rechten Winkels zu einer Horizontalen verläuft.

## Claims

1. Battery connector (1) for accumulators comprising connection regions (2, 3) that are connected by conductor elements having a conductor cross section, it being possible to bend the battery connector (1) in the region of the conductor elements, **characterised in that** the conductor elements consist of a plurality of flat parts (4, 5, 6), which are located directly on top of one another at the facing broadsides between the connection regions (2, 3) within a first insulation (7) that entirely covers the conductor elements, said flat parts having a width/thickness ratio of from 5:1 to 100:1, and further being able to move relative to each other as a result of the flat parts (4, 5, 6) being connected in the overlapping region only by means of the first insulation (7), the plurality of flat parts (4, 5, 6) further being jointly insert moulded in the connection regions (2, 3).

2. Battery connector according to claim 1, **characterised in that** the flat parts (4, 5, 6) consist of different materials.

3. Battery connector according to either of the preceding claims, **characterised in that** one or more flat parts (4, 5, 6) consist of copper.

4. Battery connector according to any of the preceding claims, **characterised in that** one or more flat parts (4, 5, 6) consist of aluminium.

5. Battery connector according to any of the preceding claims, **characterised in that** one or more flat parts (4, 5, 6) consist of copper-clad aluminium.

6. Battery connector according to any of the preceding claims, **characterised in that** a plurality of conductor elements grouped within a second insulation consist of a plurality of flat parts (4, 5, 6) grouped within the first insulation.

7. Battery connector according to any of the preceding claims, **characterised in that** a connection region (2, 3) is twisted relative to the region of the flat parts (4, 5, 6) extending between the connection regions (2, 3).

8. Battery connector according to claim 7, **characterised in that** the twisting takes place within an angular range of from 5° to 100°.

9. Battery connector according to any of the preceding claims, **characterised in that**, in plan view, a region of the flat parts (4, 5, 6) extending between the connection regions (2, 3) extends in one of more U-shapes.

10. Battery connector according to claim 9, **characterised in that**, in plan view, the battery connector as a whole extends in a U-shape.

11. Accumulator (14) comprising a battery connector (1) that is arranged between two poles (10, 11) of elements of the accumulator so as to electrically connect said accumulator, which battery connector has the features of any of claims 1 to 11, **characterised in that** the battery connector (1) consists of one or more flat parts (4, 5, 6) and extends between connection regions (2, 3) in such a way that a plane of extension of a flat part (4, 5, 6) extends so as to enclose an acute or right angle to a horizontal.

## Revendications

1. Connecteur de batterie (1) pour batteries à accumulateurs, ayant des zones de raccordement (2, 3) reliées au moyen d'éléments conducteurs qui présentent une section de conducteur, le connecteur de batterie (1) étant flexible dans la zone des éléments conducteurs, **caractérisé en ce que** les éléments conducteurs sont constitués d'une pluralité de pièces plates (4, 5, 6) situées directement l'une sur l'autre sur les côtés larges se faisant face entre les zones de raccordement (2, 3) à l'intérieur d'une première isolation (7) comprenant les éléments conducteurs dans leur ensemble, étant entendu qu'ils présentent un rapport entre leur largeur et leur épaisseur de 5:1 à 100:1, qu'après la liaison des pièces plates (4, 5, 6) dans la zone superposée uniquement à travers la première isolation (7), ils peuvent bouger l'un par rapport à l'autre et que les multiples pièces plates (4, 5, 6) sont enrobées conjointement dans les zones de raccordement (2, 3).

2. Connecteur de batterie selon la revendication 1, **caractérisé en ce que** les pièces plates (4, 5, 6) sont réalisées à partir de matériaux différents.

3. Connecteur de batterie selon l'une des revendications précédentes, **caractérisé en ce qu'**une ou plusieurs pièces plates (4, 5, 6) sont réalisées en cuivre.

4. Connecteur de batterie selon l'une des revendications précédentes, **caractérisé en ce qu'**une ou plusieurs pièces plates (4, 5, 6) sont réalisées en aluminium.

5. Connecteur de batterie selon l'une des revendications précédentes, **caractérisé en ce qu'**une ou plusieurs pièces plates (4, 5, 6) sont réalisées en aluminium gainé de cuivre.

6. Connecteur de batterie selon l'une des revendications précédentes, **caractérisé en ce que** plusieurs éléments conducteurs rassemblés dans une deuxième isolation sont constitués d'une pluralité de pièces plates (4, 5, 6) rassemblées dans la première isolation.

7. Connecteur de batterie selon l'une des revendications précédentes, **caractérisé en ce qu'**une zone de raccordement (2, 3) est décalée en rotation par rapport à la zone des pièces plates (4, 5, 6) qui s'étend entre les zones de raccordement (2, 3).

8. Connecteur de batterie selon la revendication 7, **caractérisé en ce que** le décalage est réalisé dans une zone d'angle de 5° à 100°.

9. Connecteur de batterie selon l'une des revendications précédentes, **caractérisé en ce que** dans une vue du dessus, une zone des pièces plates (4, 5, 6) qui s'étend entre les zones de raccordement (2, 3) s'étend une ou plusieurs fois en forme de U.

10. Connecteur de batterie selon la revendication 9, **caractérisée en ce que** dans une vue du dessus, le connecteur de batterie est réalisé dans son ensemble en forme de U.

11. Batterie à accumulateurs (14) ayant une attache de batterie (1) possédant les caractéristiques d'une des revendications 1 à 11 agencée entre deux pôles (10, 11) d'éléments de la batterie à accumulateurs, en reliant ceux-ci électriquement, **caractérisée en ce que** le connecteur de batterie (1) est constitué d'une ou plusieurs pièces plates (4, 5, 6) et s'étend entre des zones de raccordement (2, 3) de telle sorte qu'un plan d'extension d'une pièce plate (4, 5, 6) s'étend en incluant un angle aigu ou droit par rapport à l'horizontale.
